# EUROPEAN PATENT APPLICATION

(11) **EP 4 318 787 A1**
(43) Date of publication of application: **07.02.2024**
(21) Application number: 21932295.5
(22) Date of filing: 26.03.2021
(51) Int. Cl.: H01M 50/543

(54) **POLE, BATTERY AND ELECTRONIC DEVICE**

(71) Applicant: Ningde Amperex Technology Ltd., Ningde City, Fujian Province 352100 (CN)
(72) Inventor: GUO, Peipei, Ningde City, Fujian Province 352100 (CN); HE, Ping, Ningde City, Fujian Province 352100 (CN); PENG, Yejun, Ningde City, Fujian Province 352100 (CN)
(74) Representative: Icosa
(86) International application number: PCT/CN2021/083424
(87) International publication number: WO 2022/198676

(57) **Abstract**

This disclosure provides a pole, a battery, and an electronic device. The battery includes a housing, a cover, a sealing member, a connecting member, a cell, and a pole. The electronic device includes a device housing and a battery. The pole includes a substrate and a lead-out portion disposed on the substrate, where the lead-out portion includes a first portion, a second portion, and a mounting hole. The second portion is connected to an end of the first portion away from the substrate. The mounting hole is connected to the first portion and the second portion, where an opening of the mounting hole is located in the second portion. In a direction parallel to the substrate, minimum cross-sectional area of the first portion is greater than maximum cross-sectional area of the second portion. The pole has the first portion and the second portion of different cross-sectional areas disposed on the lead-out portion so that the second portion can be more easily riveted and bent against the first portion during riveting, thereby reducing the acting force exerted on the connecting member during riveting and avoiding connecting member warping. The structure is simple and reliable. Therefore, the safety and reliability of the riveted battery can be improved.

## Description

### TECHNICAL FIELD

This application relates to the field of electric vehicle battery technologies and particularly, to a pole, a battery, and an electronic device.

### BACKGROUND

In the prior art, when a pole is riveted, a gasket needs to be disposed between a bent part and a sealing ring of the pole. However, the pole cannot support the gasket, and therefore, it is easy for the gasket to deform and warp under pressure during riveting. Under the acting force of the gasket, the sealing ring is subjected to damage or micro-crack defects, causing a short circuit inside batteries and affecting the safety and reliability of batteries.

### SUMMARY

In view of the foregoing situation, it is necessary to provide a pole, a battery, and an electronic device to avoid gasket warping caused by pressing during pole riveting while such warping affects the sealing effect of sealing rings.

An embodiment of this application provides a pole including a substrate and a lead-out portion disposed on the substrate. The lead-out portion includes a first portion, a second portion, and a mounting hole. The second portion is connected to an end of the first portion away from the substrate. The mounting hole is connected to the first portion and the second portion, where an opening of the mounting hole is located in the second portion. In a direction parallel to the substrate, minimum cross-sectional area of the first portion is greater than maximum cross-sectional area of the second portion.

The pole has the first portion and the second portion of different cross-sectional areas disposed on the lead-out portion so that the second portion can be more easily riveted and bent against the first portion during riveting, thereby avoiding gasket warping caused by pressing during pole riveting and improving the safety and reliability of batteries.

In some embodiments of this application, cross-sectional area of the second portion in the direction parallel to the substrate decreases in a direction leaving the first portion.

The cross-sectional area of the second portion being smaller than the cross-sectional area of the first portion makes it easier to bend and rivet the second portion against the first portion.

In some embodiments of this application, the first portion is a columnar structure, the second portion is a columnar structure, and outer diameter of the first portion is greater than outer diameter of the second portion.

With a stepped outer contour, the lead-out portion can provide a positioning and support function during riveting of the second portion.

An embodiment of this application further provides a battery including a housing, a cover, a sealing member, a connecting member, a cell, and a pole formed through compressive deformation of the foregoing pole. The housing has a rivet hole. The cover is connected to the housing to form a cavity together with the housing. The substrate is located within the cavity, the first portion is inserted into the rivet hole, and the second portion is bent away from the mounting hole. The sealing member is fitted on the pole and located between the housing and the pole. The connecting member is disposed between the second portion and the sealing member. The cell is disposed within the cavity and electrically connected to the pole.

The pole of the battery has the first portion and the second portion of different cross-sectional areas disposed on the lead-out portion so that the second portion can be more easily riveted and bent against the first portion during riveting. Therefore, this reduces the acting force on the connecting member during riveting, avoids gasket warping, and ensures that the sealing member not only allows the battery to be insulatedly connected to the housing but also fills and seals a gap between the pole and the housing. The structure is simple and reliable. Therefore, the safety and reliability of the riveted battery can be improved.

In some embodiments of this application, two ends of the connecting member are fitted against the second portion and the sealing member respectively.

The second portion compresses the sealing member by pressing against the connecting member, to compress the sealing member so that the sealing member has the insulation and sealing function.

In some embodiments of this application, an end of the connecting member near the mounting hole abuts against the second portion.

In a case of the connecting member pressing the sealing member, damage to the sealing member can be avoided, where the damage is caused when the sealing member is pressed into a gap between an end of the connecting member and the second portion.

In some embodiments of this application, an abutment between the connecting member and the second portion includes a slope.

The slope allows a bent corner of the second portion not to press against the connecting member, thereby further preventing the connecting member from warping.

In some embodiments of this application, the sealing member includes a first sealing segment, a second sealing segment, and a third sealing segment. The first sealing segment has two ends fitted against the substrate and an inner wall of the housing respectively. The second sealing segment is connected to the first sealing segment, and the second sealing segment has two ends fitted against the first portion and the inner wall of the rivet hole respectively. The third sealing segment is connected to an end of the second sealing segment away from the first sealing segment, and the third sealing segment has two ends fitted against the connecting member and an outer wall of the housing respectively.

The sealing member can ensure that the pole is not electrically connected to the housing and fills and seals a gap between the pole and the rivet hole.

In some embodiments of this application, at least any two of the first sealing segment, the second sealing segment, and the third sealing segment are integrally formed.

The integrally formed sealing member can avoid electrical connection between the connecting member and the housing and electrical connection between the pole and the housing that are caused by the connecting member pressing the third sealing segment outward, while such electrical connection causes a short circuit of the battery.

In some embodiments of this application, an end of the sealing member near the second portion has a slope.

The slope at the end of the sealing member makes it easy for the connecting member to press the sealing member outward to deform the sealing member, thereby avoiding stacking of the sealing member during riveting.

In some embodiments of this application, a part of the sealing member fitted against an inner wall of the housing has a protruding portion.

The protruding portion can further ensure the sealing reliability between the sealing member and the inner wall of the housing.

In some embodiments of this application, the cell further includes a positive electrode tab and a negative electrode tab, where one of the positive electrode tab and the negative electrode tab is electrically connected to the housing, and the other one of the positive electrode tab and the negative electrode tab is electrically connected to the pole.

The positive electrode tab and the negative electrode tab connect the cell, the housing, and the pole together, allowing the cell to supply power to an external device.

An embodiment of this application further provides an electronic device including a device housing and the foregoing battery, where the battery is mounted inside the device housing.

The pole of the electronic device has the first portion and the second portion of different cross-sectional areas disposed on the lead-out portion so that the second portion can be more easily riveted and bent against the first portion during riveting. Therefore, this reduces the acting force on the connecting member during riveting, avoids gasket warping, and ensures that the sealing member not only allows the pole to be insulatedly connected to the housing but also fills and seals a gap between the pole and the housing. The structure is simple and reliable. Therefore, the safety and reliability of the riveted battery can be improved.

### BRIEF DESCRIPTION OF DRAWINGS

FIG. 1 is a schematic structural diagram of a battery according to an embodiment of this application.
FIG. 2 is a partial cross-sectional view of a battery according to an embodiment of this application.
FIG. 3 is an enlarged view of a pole according to an embodiment of this application.
FIG. 4 is a schematic structural diagram of a pole according to an embodiment of this application.
FIG. 5 is a schematic structural diagram of a pole according to another embodiment of this application.
FIG. 6 is a schematic structural diagram of a pole according to another embodiment of this application.
FIG. 7 is a schematic structural diagram of a pole according to another embodiment of this application.
FIG. 8 is a schematic structural diagram of a sealing member according to an embodiment of this application.
FIG. 9 is a schematic structural diagram of a to-be-riveted pole part according to an embodiment of this application.
FIG. 10 is a schematic structural diagram of a sealing member according to another embodiment of this application.
FIG. 11 is a schematic structural diagram of a sealing member according to another embodiment of this application.

### Reference signs of main components:

| | |
|---|---|
| battery | 100 |
| housing | 1 |
| cover | 2 |
| cell | 3 |
| positive electrode tab | 31 |
| negative electrode tab | 32 |
| pole | 4 |
| substrate | 41 |
| substrate surface | 411 |
| lead-out portion | 42 |
| first portion | 421 |
| second portion | 422 |
| first mounting hole | 423 |
| connecting portion | 424 |
| sealing member | 5 |
| base plate | 51 |
| extension portion | 52 |
| second mounting hole | 53 |
| first sealing segment | 54 |
| second sealing segment | 55 |
| third sealing segment | 56 |
| protruding portion | 57 |
| connecting member | 6 |

This application will be further described with reference to the accompanying drawings in the following specific embodiments.

### DESCRIPTION OF EMBODIMENTS

The following describes the technical solutions in the embodiments of this application with reference to the accompanying drawings in the embodiments of this application. Apparently, the described embodiments are only some rather than all of the embodiments of this application.

It should be noted that when a component is deemed as being "connected to" another component, it may be directly connected to the another component, or there may be a component disposed in between. When a component is deemed as being "disposed" on another component, it may be directly disposed on the another component, or there may be a component disposed in between.

Unless otherwise defined, all technical and scientific terms used herein shall have the same meanings as commonly understood by those skilled in the art to which this application pertains. The terms used herein in the specification of this application are for description of specific embodiments only without any intention to limit this application.

Embodiments of this application provide a pole, a battery, and an electronic device. The battery includes a housing, a cover, a sealing member, a connecting member, a cell, and a pole. The electronic device includes a device housing and a battery. The pole includes a substrate and a lead-out portion disposed on the substrate, where the lead-out portion includes a first portion, a second portion, and a mounting hole. The second portion is connected to an end of the first portion away from the substrate. The mounting hole is connected to the first portion and the second portion, where an opening of the mounting hole is located in the second portion. In a direction parallel to the substrate, minimum cross-sectional area of the first portion is greater than maximum cross-sectional area of the second portion.

The pole has the first portion and the second portion of different cross-sectional areas disposed on the lead-out portion so that the second portion can be more easily riveted and bent against the first portion during riveting. Therefore, this reduces the acting force on the connecting member during riveting, and avoids warping of the connecting member and thus further prevents the connecting member from generating, during warping of the connecting member, an acting force which pulls the sealing member away from the pole, so that the sealing member not only allows the pole to be insulatedly connected to the housing but also fills and seals a gap between the pole and the housing. The structure is simple and reliable. Therefore, the safety and reliability of the riveted battery can be improved.

The following further describes the embodiments of this application with reference to the accompanying drawings.

An embodiment of this application provides an electronic device. The electronic device includes a device housing and a battery. The battery is mounted inside the device housing and supplies electrical energy to the electronic device.

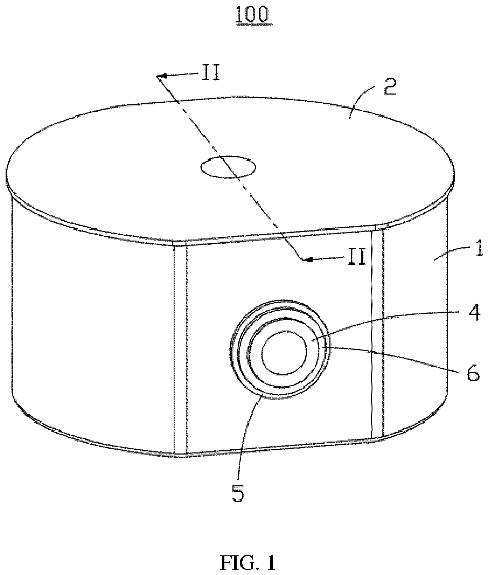

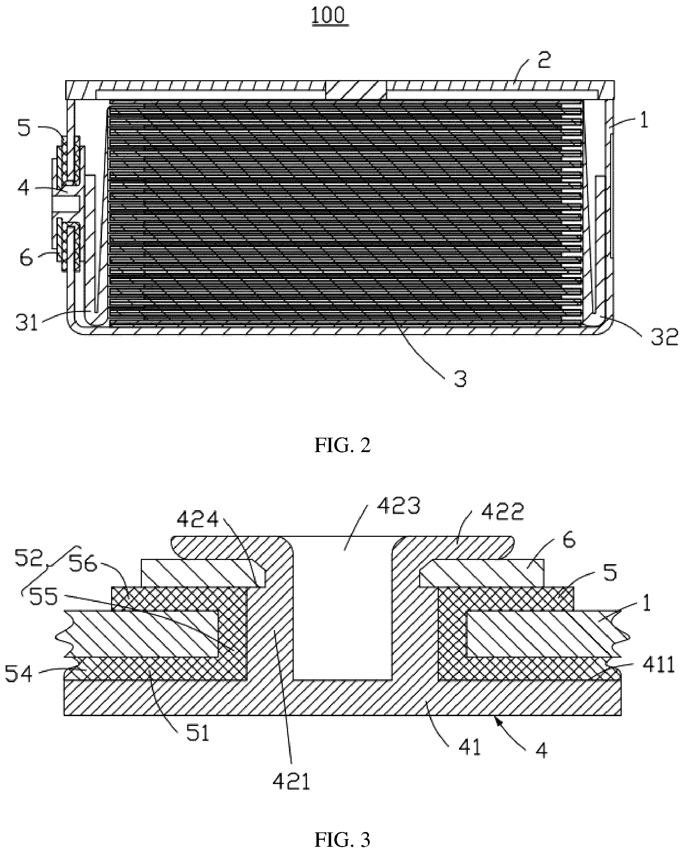

As shown in FIGs. 1 and 2, the battery 100 includes a housing 1, a cover 2, a cell 3, a sealing member 5, a connecting member 6, and a pole 4.

The cover 2 is disposed at an opening of the housing 1. The cover 2 and the housing 1 form a cavity.

The cover 2 may be welded or adhered at the opening of the housing 1.

The cell 3 is disposed inside the cavity and includes a positive electrode plate, a negative electrode plate, a positive electrode tab 31, a negative electrode tab 32. The positive electrode tab 31 is connected to the positive electrode plate, and the negative electrode tab 32 is connected to the negative electrode plate.

The pole 4 may be disposed on a side wall of the housing 1 or may be disposed on the end cover. Further description will be made below with an example of the pole 4 being disposed on the side wall of the housing 1.

The side wall of the housing 1 is provided with a rivet hole, and the pole 4 is disposed in the rivet hole and riveted to the side wall of the housing 1. In addition, a part of the pole 4 is located inside the cavity of the housing 1, and a part of the pole 4 is located outside the housing 1. The part of the pole 4 located inside the cavity is configured to be electrically connected to the cell 3, and the part of the pole 4 located outside the housing 1 is configured to be connected to an electronic device.

One of the positive electrode tab 31 and the negative electrode tab 32 is electrically connected to the housing 1, and the other one of the positive electrode tab 31 and the negative electrode tab 32 is electrically connected to the part of the pole 4 located inside the cavity. This ensures that the positive electrode tab 31 and the negative electrode tab 32 connect the pole 4 and the housing 1 to the positive electrode plate and the negative electrode plate inside the cell 3, allowing the cell 3 to transport electrical energy generated to the outside.

Further description will be made below with an example of the positive electrode tab 31 being connected to the pole 4 and the negative electrode tab 32 being connected to the housing 1.

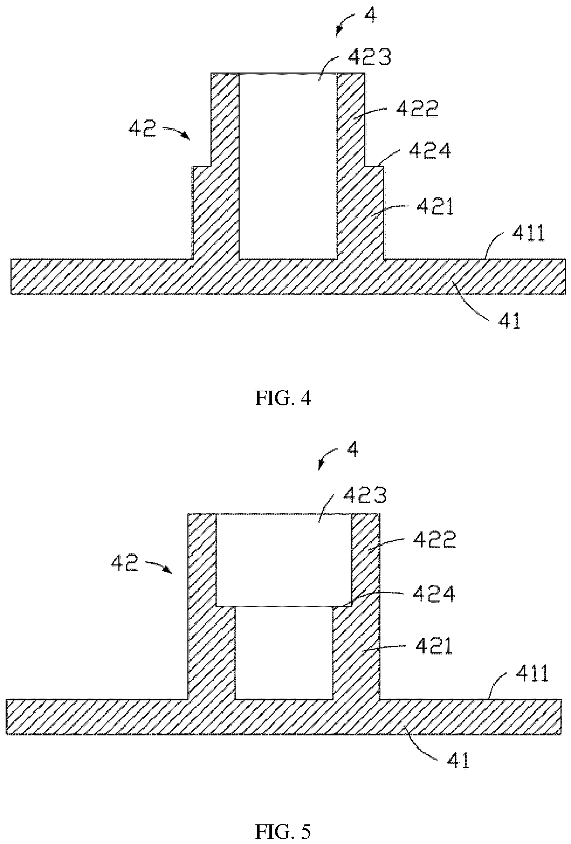

As shown in FIGs. 3 and 4, after riveted in the rivet hole, the pole 4 is insulatedly connected to the housing 1 through the sealing member 5.

The pole 4 includes a substrate 41 and a lead-out portion 42 disposed on the substrate 41. The substrate 41 has a substrate surface 411, and the lead-out portion 42 is disposed on the substrate surface 411.

The lead-out portion 42 has a central axis, the central axis has an included angle with the substrate surface 411, and the included angle may be 90°.

The lead-out portion 42 includes a first portion 421, a second portion 422, and a first mounting hole 423.

The second portion 422 is connected to the first portion 421, and the second portion 422 is disposed at an end of the first portion 421 away from the substrate 41.

The first mounting hole 423 is connected to the first portion 421 and the second portion 422, and an opening of the first mounting hole 423 is located in the second portion 422.

In a central axis direction of the first mounting hole 423, length of the first mounting hole 423 is not greater than a sum of thicknesses of the lead-out portion 42 and the substrate 41, that is, the first mounting hole 423 does not run through the pole 4.

A central axis of the first mounting hole 423 may overlap with the central axis of the lead-out portion 42.

When the pole 4 is not yet riveted into the rivet hole, the substrate 41 is located inside the housing 1, and the second portion 422 extends outside the housing 1. A rivet of a riveting device may be used for the connection of the first mounting hole 423 to allow for folding of the second portion 422, so as to rivet the pole 4 to the side wall of the housing 1.

Further description will be made below with an example of implementing edge folding of the second portion 422 through a rivet.

The housing 1 is generally made of metal material. In order to prevent the pole 4 from coming into contact with the housing 1 to cause a short circuit of the battery 100, the sealing member 5 needs to be fitted on the pole 4 so that the pole 4 is insulatedly connected to the housing 1.

When the pole 4 fitted with the sealing member 5 is disposed in the rivet hole, a rivet is connected to the first mounting hole 423, to make the second portion 422 circumferential fold towards a direction leaving the first mounting hole 423 until the sealing member 5 tightly abuts against the side wall of the housing 1. At this time, the sealing member 5 not only allows the pole 4 to be insulatedly connected to the side wall of the housing 1, but also fills a gap between the pole 4 and the rivet hole to prevent electrolyte in the cavity from flowing out.

During riveting operation, it is difficult to control the bending amount of the second portion 422. As a result, it is highly likely that the sealing ring is over-compressed duo to excessive riveting, causing damage or micro-crack defects, or has no sealing effect due to inadequate riveting. Therefore, in this embodiment of this application, with the connecting member 6 fitted on the lead-out portion 42, the sealing member 5 can be driven to deform with the folding of the lead-out portion 42 during riveting operation, to form an "H"-shaped riveting structure, thereby ensuring the insulation and sealing effect of the sealing member 5.

The connecting member 6 is a ring-shaped structure with a central hole, and inner diameter of the central hole corresponds to outer diameter of the lead-out portion 42, allowing the connecting member 6 to be fitted on the lead-out portion 42.

Furthermore, the connecting member 6 is fitted on the second portion 422 and disposed between the second portion 422 bent and the sealing member 5, to apply planar pressure to the sealing member 5 so as to prevent damage or micro-crack defects of the sealing member 5, thereby ensuring the insulation and sealing effect of the sealing member 5.

Moreover, in order to effectively control the bending amount of the second portion 422, a connecting portion 424 is disposed between the second portion 422 and the first portion 421. During riveting operation, the connecting portion 424 can restrain and support the connecting member 6 to prevent the connecting member 6 from warping.

To further prevent the connecting member 6 from warping, an abutment between the connecting member 6 and the second portion 422 is provided with a slope. The slope can prevent a bent corner of the second portion 422 from pressing against the connecting member 6.

The connecting member 6 may be a metal gasket.

The sealing member 5 may be an insulating sealing ring, and the material of the sealing ring may be any one of silicone rubber, nitrile rubber, hydrogenated nitrile rubber, fluororubber, ethylene propylene diene monomer rubber, neoprene rubber, butyl rubber, acrylic rubber, natural rubber, or polyurethane rubber.

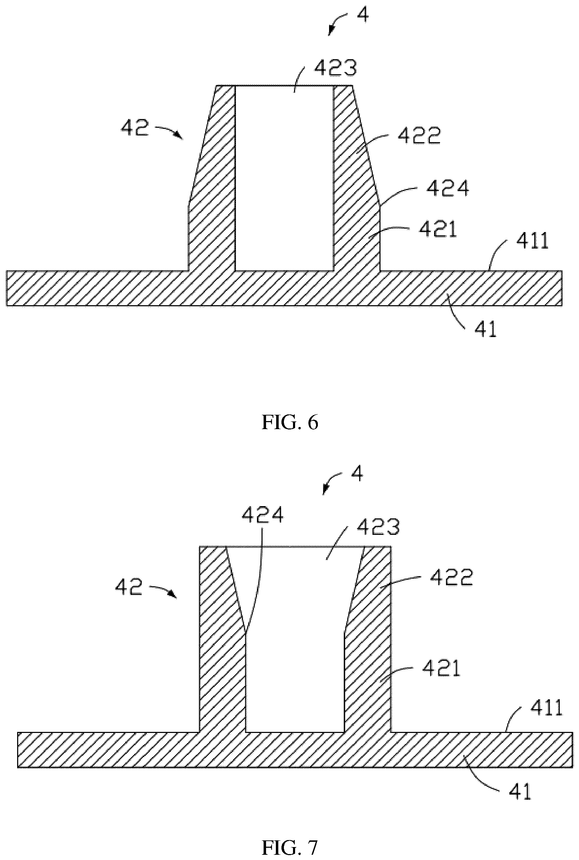

As shown in FIGs. 3, 4, 5, 6, and 7, the first portion 421 may be columnar.

In a case that the first portion 421 is columnar, the second portion 422 may also be columnar. In this case, since the first mounting hole 423 is connected to the first portion 421 and the second portion 422, both the first portion 421 and the second portion 422 are cylindrical structures. In order to make cross-sectional area of the second portion 422 smaller than cross-sectional area of the first portion 421, the first portion 421, the second portion 422, and the connecting portion 424 may form a stepped structure. That is, inner diameter of the second portion 422 is made equal to inner diameter of the first portion 421 (the first mounting hole 423 is a structure of equal-diameter), and outer diameter of the second portion 422 is made smaller than outer diameter of the first portion 421; or outer diameter of the second portion 422 is made equal to outer diameter of the first portion 421, and inner diameter of the second portion 422 is made greater than outer diameter of the first portion 421 (the first mounting hole 423 is a structure of variable diameter).

In a case that the inner diameter of the second portion 422 is equal to the inner diameter of the first portion 421 and that the outer diameter of the second portion 422 is smaller than the outer diameter of the first portion 421, the connecting portion 424 is located at the periphery of the lead-out portion 42. The connecting portion 424 can restrain and support the connecting member 6 during riveting, further ensuring that the connecting member 6 does not warp.

In a case that the first portion 421 is columnar, the second portion 422 may also be a tapered structure. That is, in a case that the inner diameter of the second portion 422 is equal to the inner diameter of the first portion 421, the outer diameter of the second portion 422 forms a taper structure, and the cross-sectional area of the second portion 422 decreases in a direction leaving the first portion 421. In a case that the outer diameter of the second portion 422 is equal to the outer diameter of the first portion 421, the inner diameter of the second portion 422 forms a tapered structure, and the cross-sectional area of the second portion 422 decreases in a direction leaving the first portion 421. A joint between the tapered surface of the second portion 422 and the first portion 421 is the connecting portion 424.

With the cross-sectional area of the second portion 422 smaller than the cross-sectional area of the first portion 421, not only the second portion 422 can be more easily riveted and bent against the first portion 421, thereby reducing the acting force exerted on the connecting member 6 during riveting and preventing the connecting member 6 from warping, but also the thickness of the riveting end can be effectively reduced, thereby increasing the energy density of the cell 3.

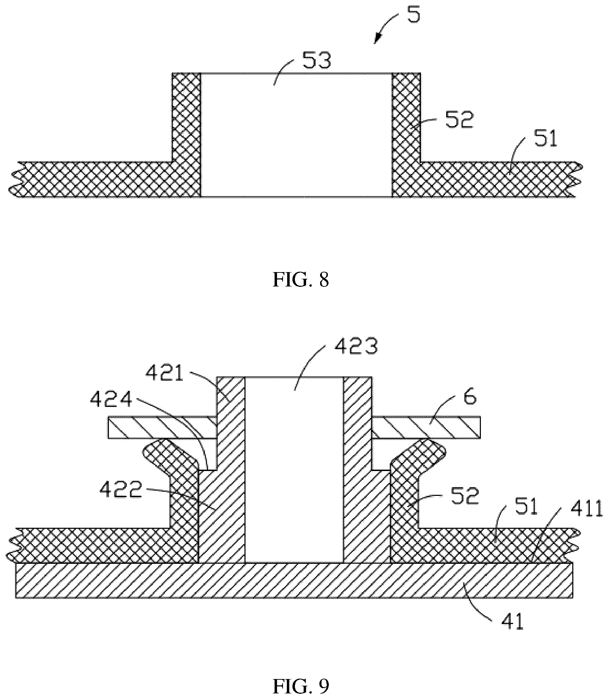

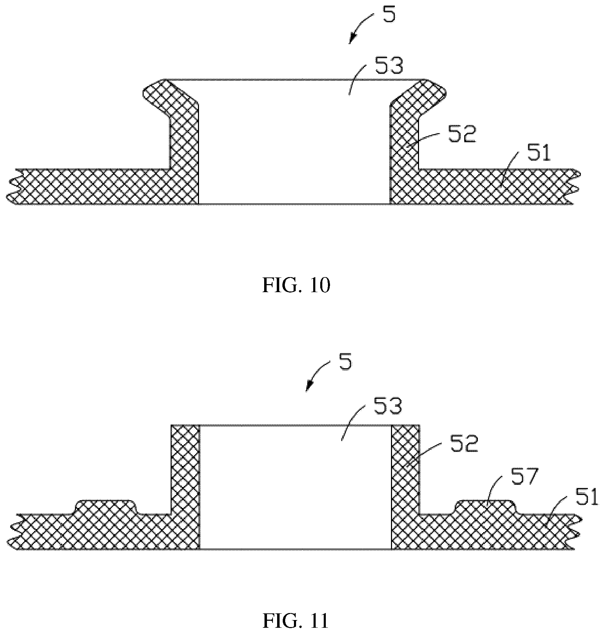

As shown in FIGs. 3, 8, 9, 10, and 11, in order to tightly fit the sealing member 5 on the pole 4, the sealing member 5 may be a "T"-shaped structure with a through-hole.

The sealing member 5 includes a base plate 51, an extension portion 52, and a second mounting hole 53. The extension portion 52 is disposed on the base plate 51, and the second mounting hole 53 runs through the base plate 51 and the extension portion 52. Inner diameter of the second mounting hole 53 corresponds to the outer diameter of the lead-out portion 42, allowing the second mounting hole 53 to be slightly fitted on the lead-out portion 42.

In a case that the sealing member 5 is fitted on the pole 4 at a predetermined position, a surface of the base plate 51 away from the extension portion 52 is fitted against the substrate surface 411, and an inner wall of the second mounting hole 53 is fitted against the lead-out portion 42.

In a case that the pole 4 fitted with the sealing member 5 is disposed in the rivet hole at a predetermined position but has not been riveted yet, a surface of the base plate 51 facing away from the substrate 41 is fitted against the inner wall of the housing 1, and a surface of the extension portion 52 facing away from the lead-out portion 42 abuts against the side wall of the rivet hole. This ensures that the substrate 41 and the first portion 421 do not come into direct contact with the housing 1, thereby preventing a short circuit of the battery 100.

The connecting member 6 is fitted on the lead-out portion 42 and abuts against an end of the extension portion 52 away from the base plate 51. When the second portion 422 is bent outward under the action of the rivet, the second portion 422 can act on the connecting member 6 so that the connecting member 6 moves in a direction approaching the first portion 421. The connecting member 6 acts on the extension portion 52 of the sealing member 5 and causes the extension portion 52 to fold with the first portion 421 until the connecting portion 424 stops the connecting member 6. At this time, under the action of the connecting member 6, the sealing member 5 is pressed and deformed into an "H" shape.

If the sealing member 5 of "H" shape is divided into three sequentially connected parts: a first sealing segment 54, a second sealing segment 55, and a third sealing segment 56, two opposite surfaces of the first sealing segment 54 are tightly fitted against the substrate surface 411 and the inner wall of the housing 1 respectively, two opposite surfaces of the second sealing segment 55 are tightly fitted against the outer surface of the first portion 421 and the inner wall of the rivet hole respectively, and two opposite surfaces of the third sealing segment 56 are tightly fitted against the connecting member 6 and an outer wall of the housing 1 respectively. The sealing member 5 of "H" shape allows the first sealing segment 54, the second sealing segment 55, and the third sealing segment 56 to be integrally formed. Compared with the third sealing segment 56 as a separate component, the third sealing segment 56 as an integral portion prevents the connecting member 6 from pressing the third sealing segment 56 outward when the connecting member 6 is subjected to the acting force of the second portion 422, while such pressing causes electrical connection between the connecting member 6 and the housing 1, which in turn causes a short circuit of the battery.

The first sealing segment 54, the second sealing segment 55, and the third sealing segment 56 not only allow the pole 4 to be insulatedly connected to the housing 1, but also effectively fill and seal a gap between the pole 4 and the rivet hole to prevent electrolyte in the cavity from flowing out.

In order to effectively fold the extension portion 52 when the connecting member 6 presses against the sealing member 5, so as to prevent the extension portion 52 from stacking, an end of the extension portion 52 away from the base plate 51 may have a slope to some extent, with the inclined portion extending in a direction leaving the second mounting hole 53.

In the riveted state, to further ensure the sealing strength between the base plate 51 and the inner wall of the housing 1, a ring-shaped protruding portion 57 may be disposed on a side of the base plate 51 disposed with the extension portion 52.

To sum up, in the pole 4 described above, with the first portion 421 and the second portion 422 with different cross-sectional areas disposed on the lead-out portion 42, not only the second portion 422 can be more easily riveted and bent against the first portion 421, thereby reducing the acting force exerted on the connecting member 6 during riveting and preventing the connecting member 6 from warping, but also the thickness of the riveting end can be effectively reduced, thereby increasing the energy density of the cell 3. Riveting the "T"-shaped sealing member 5 into an "H" shape can effectively prevents electrical connection between the connecting member 6 and the housing 1 caused by the connecting member 6 pressing the sealing member 5 outward. The slope is disposed on the end of the seaming member close to the second portion 422 to prevent the sealing member 5 from stacking in deformation. The protruding portion 57 is disposed on the base plate 51 of the sealing member 5 to further guarantee the sealing strength between the sealing member 5 and the inner wall of the housing 1. The structure is simple and reliable. Therefore, the safety and reliability of the riveted battery 100 can be improved.

In addition, persons skilled in the art can also make other changes within the spirit of this application. Certainly, these changes made according to the spirit of this application shall fall within the scope of this application.

## Claims

1. A pole comprising a substrate and a lead-out portion disposed on the substrate, wherein the lead-out portion comprises:
a first portion;
a second portion connected to an end of the first portion away from the substrate; and
a mounting hole connected to the first portion and the second portion, wherein an opening of the mounting hole is located in the second portion; wherein
in a direction parallel to the substrate, minimum cross-sectional area of the first portion is greater than maximum cross-sectional area of the second portion.

2. The pole according to claim 1, wherein cross-sectional area of the second portion in the direction parallel to the substrate decreases in a direction leaving the first portion.

3. The pole according to claim 1, wherein the first portion is a columnar structure, the second portion is a columnar structure, and outer diameter of the first portion is greater than outer diameter of the second portion.

4. A battery comprising:
a housing having a rivet hole;
a cover connected to the housing to form a cavity together with the housing;
a pole, wherein the pole is formed through compressive deformation of the pole according to any one of claims 1 to 3, the substrate is located within the cavity, the first portion is inserted into the rivet hole, and the second portion is bent away from the mounting hole;
a sealing member fitted on the pole and located between the housing and the pole;
a connecting member disposed between the second portion and the sealing member; and
a cell disposed within the cavity and electrically connected to the pole.

5. The battery according to claim 4, wherein two ends of the connecting member are fitted against the second portion and the sealing member respectively.

6. The battery according to claim 4, wherein an end of the connecting member near the mounting hole abuts against the second portion.

7. The battery according to claim 6, wherein an abutment between the connecting member and the second portion comprises a slope.

8. The battery according to claim 4, wherein the sealing member comprises:
a first sealing segment having two ends fitted against the substrate and an inner wall of the housing respectively;
a second sealing segment connected to the first sealing segment, wherein two ends of the second sealing segment are fitted against the first portion and an inner wall of the rivet hole respectively; and
a third sealing segment connected to an end of the second sealing segment away from the first sealing segment, wherein two ends of the third sealing segment are fitted against the connecting member and an outer wall of the housing respectively.

9. The battery according to claim 8, wherein at least any two of the first sealing segment, the second sealing segment, and the third sealing segment are integrally formed.

10. The battery according to claim 4, wherein an end of the sealing member near the second portion has a slope.

11. The battery according to claim 4, wherein a part of the sealing member fitted against an inner wall of the housing has a protruding portion.

12. An electronic device comprising a device housing, and further comprising the battery according to any one of claims 4 to 11, wherein the battery is mounted inside the device housing.
